# EUROPÄISCHE PATENTANMELDUNG

(11) **EP 1 933 126 A2**
(43) Veröffentlichungstag der Anmeldung: **18.06.2008**
(21) Anmeldenummer: 07021262.6
(22) Anmeldetag: 31.10.2007
(51) Int. Cl.: G01N 3/40, G01N 3/18

(54) **Verfahren und Vorrichtung zum Bestimmen einer Anfälligkeit eines Werkstoffes gegen dynamische Reckalterung**

(30) Priorität: 15.12.2006 DE 102006059791
(71) Anmelder: AREVA NP GmbH, 91052 Erlangen (DE)
(72) Erfinder: Devrient, Bastian, 91077 Neunkirchen (DE); Schendzielorz, Herbert, 91056 Erlangen (DE); Roth, Armin, 90574 Roßtal (DE)
(74) Vertreter: Tergau & Pohl Patentanwälte

(57) **Zusammenfassung**

Es werden ein Verfahren und eine Vorrichtung zum Bestimmen einer Anfälligkeit eines Werkstoffes gegen dynamische Reckalterung vorgeschlagen, die beispielsweise für eine nicht zerstörende Werkstoffprüfung von druckumschließenden Komponenten der Kraftwerkstechnik einsetzbar sind. Das Verfahren umfasst die Schritte des Eindrückens einer Prüfspitze (16) aus einem Werkstoff, der härter als der zu prüfende Werkstoff ist, in eine Oberfläche eines Probenkörpers (10) aus dem zu prüfenden Werkstoff; des Erfassens von Druckkraft und Eindringtiefe der Prüfspitze (16); und des Bestimmens der Anfälligkeit des Werkstoffes gegen dynamische Reckalterung aus den erfassten Kraft-Weg-Kurven.

## Beschreibung

Die Erfindung betrifft ein Verfahren und eine Vorrichtung zum Bestimmen einer Anfälligkeit eines Werkstoffes gegen dynamische Reckalterung, die insbesondere für eine Werkstoffprüfung zur Beurteilung von niedriglegierten Stählen für druckumschließende Komponenten in der Kraftwerkstechnik eingesetzt werden können.

Zur Werkstoffcharakterisierung, und insbesondere zur Bestimmung von Festigkeits- und Duktilitätskennwerten, ist neben weiteren Versuchsarten speziell der Zugversuch Stand von Wissenschaft und Technik. Der Zugversuch gehört zu der Gruppe der zerstörenden Werkstoffprüfung und erfordert daher zur Generierung von Werkstoffkennwerten ein entsprechendes Probenvolumen. Im Gegensatz dazu gibt es auch nicht zerstörende Werkstoffprüfungen, zu denen zum Beispiel die Härteprüfung gezählt wird.

In verschiedenen Fällen kann es erforderlich sein, mit einer nicht zerstörenden Werkstoffprüfung Aussagen hinsichtlich der Kennwerte von Werkstoffen zu treffen. Dies gilt zum Beispiel bei niedriglegierten Stählen für druckumschließende Komponenten in der Kraftwerkstechnik, bei denen ein Anfälligkeitsgrad gegen die so genannte dynamische Reckalterung (ruckhaftes Fließen des Werkstoffes bei Temperaturen um zum Beispiel etwa 300°C) bestimmt werden soll. Hierzu fehlt bisher eine Untersuchungsmethode, die es ermöglicht, an einem Bauteil oder vor Ort eine Aussage hinsichtlich der Anfälligkeit gegen dynamische Reckalterung zu treffen.

Bisher wurde die Aussage, ob und gegebenenfalls wie stark ein Werkstoff zur dynamischen Reckalterung neigt, über die Durchführung von langsamen Zugversuchen bei unterschiedlichen Versuchsparametern (Dehnrate und Temperatur) auf der Basis der gemessenen Spannungs-Dehnungs-Diagramme getroffen. Zu diesem Zweck wurden mindestens fünf Zugversuche bei einer festen mittleren Dehnrate und fünf verschiedenen Umgebungstemperaturen durchgeführt. Bei fragwürdigen Untersuchungsergebnissen musste das Versuchsprogramm jedoch um eine entsprechende Anzahl an langsamen Zugversuchen erweitert werden.

Es ist eine Aufgabe der vorliegenden Erfindung, ein Verfahren und eine Vorrichtung zum zerstörungsfreien Bestimmen der Anfälligkeit eines Werkstoffes gegen dynamische Reckalterung bereitzustellen.

Diese Aufgabe wird gelöst durch ein Verfahren mit den Merkmalen des Anspruchs 1 bzw. durch eine Vorrichtung mit den Merkmalen des Anspruchs 5. Vorteilhafte Ausgestaltungen und Weiterbildungen der Erfindung sind Gegenstand der jeweiligen Unteransprüche.

Das Verfahren zum Bestimmen einer Anfälligkeit eines Werkstoffes gegen dynamische Reckalterung enthält die Schritte:
Eindrücken einer Prüfspitze aus einem Werkstoff, der härter als der zu prüfende Werkstoff ist, in eine Oberfläche eines Bauteils oder eines Probenkörpers aus dem zu prüfenden Werkstoff;
Erfassen von Druckkraft und Eindringtiefe der Prüfspitze; und
Bestimmen der Anfälligkeit des Werkstoffes gegen dynamische Reckalterung aus den erfassten Kraft-Weg-Kurven.

Die entsprechende Vorrichtung zum Bestimmen einer Anfälligkeit eines Werkstoffes gegen dynamische Reckalterung weist eine Probenaufnahme für ein Bauteil oder einen Probenkörper aus einem zu prüfenden Werkstoff auf; ferner einen Indenter mit einer Prüfspitze aus einem Werkstoff, der härter als der zu prüfende Werkstoff ist sowie einen Kraftsensor und einen Wegsensor zum Erfassen von Druckkraft und Eindringtiefe der Prüfspitze in eine Oberfläche des Probenkörpers; und eine Steuer- und Auswertevorrichtung zum Bestimmen der Anfälligkeit des Werkstoffes gegen dynamische Reckalterung aus den erfassten Kraft-Weg-Kurven.

Der Werkstoff wird also einer nicht zerstörenden, dynamischen Härteprüfung unterzogen, um seine Anfälligkeit gegen dynamische Reckalterung zu bestimmen, sodass er nach der Prüfung noch für weitere Untersuchungen zur Verfügung steht bzw. die Bauteilfunktion nicht beeinträchtigt wird. Diese Untersuchungsmethode ist insbesondere als Alternative zum klassischen Zugversuch unter spezifischen Versuchsbedingungen geeignet oder als ergänzende zerstörungsfreie Prüfmethode anwendbar.

In einer vorteilhaften Ausgestaltung der Erfindung wird ferner die Temperatur des Probenkörpers erfasst, sodass die Anfälligkeit des Werkstoffes gegen dynamische Reckalterung aus den erfassten Kraft-Weg-Kurven mit der Temperatur des Probenkörpers als Parameter bestimmt werden kann. Vorteilhafterweise wird dabei für ein- und denselben Probenkörper eine Mehrzahl von Kraft-Weg-Kurven aufgenommen, wobei mit Hilfe einer Heizvorrichtung jeweils unterschiedliche Werkstofftemperaturen während der Eindringprüfung eingestellt werden. Der so ermittelte, durch dynamische Härteprüfung bei verschiedenen erhöhten Temperaturen gemessene Datensatz, der der Bestimmung der Anfälligkeit gegen dynamische Reckalterung zugrunde liegt, trägt damit dem Umstand Rechnung, dass das Phänomen der dynamischen Reckalterung als thermisch aktivierter Prozess eine starke Temperaturabhängigkeit besitzt, die bei der Auswertung der Prüfergebnisse zu berücksichtigen ist.

Eine weitere wichtige Einflussgröße für die bei einem Werkstoff auftretende dynamische Reckalterung ist neben dem Gehalt an interstitiellen Fremdatomen und der Temperatur die Verformungsgeschwindigkeit bzw. die Dehnrate. In einer weiteren vorteilhaften Ausgestaltung der Erfindung wird daher zusätzlich oder alternativ auch noch die Eindringrate der Prüfspitze in den Probenkörper erfasst, sodass die Anfälligkeit des Werkstoffes gegen dynamische Reckalterung aus den erfassten Kraft-Weg-Kurven mit der Eindringrate als weiterem Parameter neben der Temperatur bestimmt werden kann. Vorteilhafterweise wird dabei für ein- und denselben Probenkörper eine Mehrzahl von Kraft-Weg-Kurven aufgenommen, wobei mit Hilfe einer elektronisch geregelten Antriebsvorrichtung für die Prüfspitze jeweils unterschiedliche Eindringraten vorgegeben werden. Insgesamt lassen sich damit systematische Versuchsreihen durchführen, bei denen sowohl die Eindringrate als auch die Werkstofftemperatur zielgerichtet und unabhängig voneinander variiert werden können.

Vorteilhafterweise wird bei der Auswertung der Messdaten anhand von zuvor empirisch ermittelten Korrelationsbeziehungen von den erfassten, unmittelbar zunächst nur für die Härte des Werkstoffs charakteristischen Messgrößen, insbesondere von den erfassten Kraft-Weg-Kurven und deren Abhängigkeit von der Werkstofftemperatur sowie ggf. von der Eindringrate, auf die Anfälligkeit des Werkstoffs für dynamische Reckalterung und/oder auf den aktuellen Alterungszustand selbst geschlossen. Grundlage für die vorab im Rahmen eines Kalibrierverfahrens stattfindende Bestimmung derartiger Korrelationsbeziehungen können insbesondere vergleichende Zugversuche herkömmlicher Art sein. Das heißt, eine Vielzahl unterschiedlicher Werkstoffproben wird zunächst einer zerstörungsfreien dynamischen Härteprüfung im hier geschilderten Sinne und anschließend einer (im Allgemeinen zur Zerstörung führenden) Zugprüfung, die unmittelbar über die Anfälligkeit gegenüber dynamischer Reckalterung Aufschluss gibt, unterworfen. Die jeweiligen Messergebnisse werden dann zueinander in Beziehung gebracht, wobei dem Fachmann eine Vielzahl ihm bekannter statistischer Methoden und rechnergestützter Hilfsmittel zur Verfügung steht, welche ggf. durch theoretische Zusammenhänge und Ansätze ergänzt werden. Nachdem eine derartige Kalibrierung, sprich eine Zuordnung temperaturabhängiger Härtegrad → dynamische Reckalterung, einmal erfolgt ist, kann anschließend anhand der bei der Eindringprüfung ermittelten Messwerte alleine in zuverlässiger Weise auf die mit der dynamischen Reckalterung verknüpften Materialeigenschaften geschlossen werden. Eine besonders vorteilhafte Anwendung dieses Verfahrens und dieser Vorrichtung wird in der nicht zerstörenden Werkstoffprüfung von druckumschließenden Komponenten in der Kraftwerkstechnik gesehen. Dabei ist es besonders vorteilhaft, derartige Untersuchungen nicht nur an eigens dafür hergestellten oder präparierten Probenkörpern vornehmen zu können, sondern bei entsprechend portabler Ausführung der Prüfvorrichtung auch in der Art eines Feldversuchs vor Ort an Bauteilen eines Kraftwerks, die sich an ihrem bestimmungsgemäßen Einsatzort bzw. in Betrieb befinden.

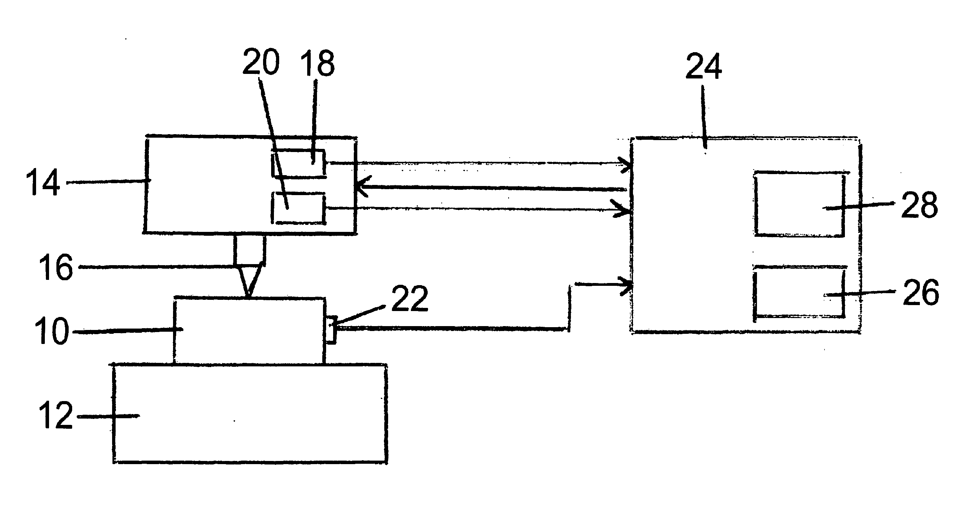

Obige sowie weitere Aufgaben, Merkmale und Vorteile der vorliegenden Erfindung werden aus der nachfolgenden Beschreibung eines bevorzugten Ausführungsbeispiels unter Bezugnahme auf die beiliegenden Zeichnungen besser verständlich. Darin zeigt die einzige Figur 1 in stark schematisierter Darstellungsform den Versuchsaufbau zum erfindungsgemäßen Bestimmen der Anfälligkeit eines Werkstoffes gegen dynamische Reckalterung.

Die in Figur 1 skizzierte Vorrichtung zum Bestimmen der Anfälligkeit eines Werkstoffes gegen dynamische Reckalterung umfasst insbesondere eine Probenaufnahme 12 in Form einer Halterung oder Auflage zum Aufnehmen eines Probenkörpers 10 aus dem zu prüfenden Werkstoff sowie einen Indenter 14 oberhalb der Probenaufnahme 12 und des Probenkörpers 10. Der Indenter 14 weist wenigstens eine Prüfspitze 16 aus einem Werkstoff einer höheren Härte als jene des zu prüfenden Werkstoffes auf, die in die dem Indenter 14 zugewandte Oberfläche des Probenkörpers 10 gedrückt werden soll.

Der Indenter 14 ist ein Prüfgerät, das ausgebildet ist, um die wenigstens eine Prüfspitze 18 mit einer definierten Kraft in die Oberfläche eines Prüfkörpers 10 zu drücken. Da Indenter 14 dem Fachmann auf dem Gebiet der Werkstoffprüfung bekannt sind, wird hier auf seine detailliertere Beschreibung verzichtet. Übliche Prüfspitzen 16 von Indentern 14 bestehen zum Beispiel aus Diamant und sind zum Beispiel mit pyramidenförmiger oder kugelförmiger Spitze ausgebildet.
An dem Indenter 14 sind ferner ein Kraftsensor 18 zum Erfassen der Kraft, mit welcher die Prüfspitze 16 in den Probenkörper 10 gedrückt wird, und ein Wegsensor 20 zum Erfassen des Weges, wie weit die Prüfspitze 16 in den Probenkörper 10 gedrückt wird, vorgesehen. Für den Kraftsensor 18 und den Wegsensor 20 können zum Beispiel Messwertaufnehmer auf LVDT-Basis verwendet werden (LVDT= linear variable differential transformer). Weiter ist ein Temperatursensor 22 zum Erfassen der Temperatur des Probenkörpers 10 vorgesehen. Mit Hilfe einer hier nicht näher dargestellten elektrischen Heizeinrichtung, die über einen zugehörigen elektronischen Regelkreis regelbar ist, können definierte Werkstofftemperaturen eingestellt und während der Dauer der jeweiligen Eindringprüfung gehalten werden.

Die Messwerte des Kraftsensors 18, des Wegsensors 20 und des Temperatursensors 22 werden einer Steuer- und Auswertevorrichtung 24 zugeführt, die auch den Betrieb des Indenters 14, d.h. das Eindrücken der Prüfspitze 16 in den Probenkörper 10 steuert. Während der Kraftaufbringung werden so die notwendige Kraft und die Eindringtiefe des Indenters 14 aufgezeichnet. Die Steuer- und Auswertevorrichtung 24 weist außerdem einen Timer 26 zur Zeiterfassung sowie einen Speicher 28 zum Speichern von Messdaten auf. Neben den Messdaten aus den mittels des Indenters 14 durchgeführten Härteprüfungen können in dem Speicher 28 auch Messdaten aus herkömmlichen Zugversuchen abgelegt sein.

Zur Bestimmung des Anfälligkeitsgrades des zu prüfenden Werkstoffes gegen dynamische Reckalterung werden mit der oben beschriebenen Vorrichtung mehrere Versuchsreihen bei verschiedenen Werkstofftemperaturen durchgeführt. Anhand der ermittelten Kraft-Weg-Kurven mit den Parametern Temperatur und Eindringrate (mittels Timer 26) bestimmt die Steuer- und Auswertevorrichtung 24 den Anfälligkeitsgrad des geprüften Werkstoffes gegen dynamische Reckalterung, indem im Falle einer solchen Anfälligkeit qualitativ auf unstetiges Fließen bzw. quantitativ auf die Veränderung von ermittelten Wertstoffkennwerten geschlossen wird. Gegebenenfalls kann hierzu auch ein Vergleich mit den im Speicher 28 abgelegten Messdaten aus herkömmlichen Zugversuchen durchgeführt werden.

Das oben beschriebene Prüfverfahren bzw. die oben beschriebene Prüfvorrichtung sind in vorteilhafter Weise zum Beispiel bei einer nicht zerstörenden Werkstoffprüfung zur Beurteilung von niedriglegierten Stählen für druckumschließende Komponenten in der Kraftwerkstechnik einsetzbar, ohne dass die vorliegende Erfindung auf diesen Anwendungszweck beschränkt sein soll. Durch diese dynamische Härtemessung wird insbesondere eine alternative bzw. ergänzende Untersuchungsmethode zum klassischen Zugversuch unter spezifischen Versuchsbedingungen bereitgestellt.

### Bezugszeichenliste

- 10: Probenkörper
- 12: Probenaufnahme
- 14: Indenter
- 16: Prüfspitze
- 18: Kraftsensor
- 20: Wegsensor
- 22: Temperatursensor
- 24: Steuer- und Auswertevorrichtung
- 26: Timer
- 28: Speicher

## Patentansprüche

1. Verfahren zum Bestimmen einer Anfälligkeit eines Werkstoffes gegen dynamische Reckalterung, mit den Schritten: Eindrücken einer Prüfspitze (16) aus einem Werkstoff, der härter als der zu prüfende Werkstoff ist, in eine Oberfläche eines Bauteils oder eines Probenkörpers (10) aus dem zu prüfenden Werkstoff; Erfassen von Druckkraft und Eindringtiefe der Prüfspitze (16); und Bestimmen der Anfälligkeit des Werkstoffes gegen dynamische Reckalterung aus den erfassten Kraft-Weg-Kurven.

2. Verfahren nach Anspruch 1, **dadurch gekennzeichnet, dass** ferner die Temperatur des Probenkörpers (10) erfasst wird; und dass die Anfälligkeit des Werkstoffes gegen dynamische Reckalterung aus den erfassten Kraft-Weg-Kurven mit der Temperatur des Probenkörpers als Parameter bestimmt wird.

3. Verfahren nach Anspruch 1 oder 2, **dadurch gekennzeichnet, dass** für ein- und denselben Probenkörper (10) eine Mehrzahl von Kraft-Weg-Kurven aufgenommen wird, wobei mit Hilfe einer Heizvorrichtung jeweils unterschiedliche Werkstofftemperaturen eingestellt werden.

4. Verfahren nach einem der Ansprüche 1 bis 3, **dadurch gekennzeichnet, dass** ferner die Eindringrate der Prüfspitze (16) in den Probenkörper (10) erfasst wird; und dass die Anfälligkeit des Werkstoffes gegen dynamische Reckalterung aus den erfassten Kraft-Weg-Kurven mit der Eindringrate als Parameter bestimmt wird.

5. Verfahren nach einem der Ansprüche 1 bis 4, **dadurch** gekennzeichet, dass für ein- und denselben Probenkörper (10) eine Mehrzahl von Kraft-Weg-Kurven aufgenommen wird, wobei mit Hilfe einer elektronisch geregelten Antriebsvorrichtung für die Prüfspitze (16) jeweils unterschiedliche Eindringraten vorgegeben werden.

6. Verfahren nach einem der Ansprüche 1 bis 5, **dadurch gekennzeichnet, dass** anhand von zuvor empirisch ermittelten Korrelationsbeziehungen von den erfassten, für die Härte des Werkstoffs charakteristischen Messgrößen, insbesondere von den erfassten Kraft-Weg-Kurven und deren Abhängigkeit von der Werkstofftemperatur, auf die Anfälligkeit des Werkstoffs für dynamische Reckalterung und/oder auf den aktuellen Alterungszustand selbst geschlossen wird.

7. Verfahren nach einem der Ansprüche 1 bis 6, **dadurch gekennzeichnet, dass** die Anfälligkeit des Werkstoffes gegen dynamische Reckalterung aus den erfassten Kraft-Weg-Kurven und einem Vergleich mit Messdaten aus herkömmlichen Zugversuchen bestimmt wird.

8. Vorrichtung zum Bestimmen einer Anfälligkeit eines Werkstoffes gegen dynamische Reckalterung, mit einer Probenaufnahme (12) für ein Bauteil oder einen Probenkörper (10) aus einem zu prüfenden Werkstoff; einem Indenter (14) mit einer Prüfspitze (16) aus einem Werkstoff, der härter als der zu prüfende Werkstoff ist, sowie einem Kraftsensor (18) und einem Wegsensor (20) zum Erfassen von Druckkraft und Eindringtiefe der Prüfspitze (16) in eine Oberfläche des Bauteils oder Probenkörpers (10); und einer Steuer- und Auswertevorrichtung (24) zum Bestimmen der Anfälligkeit des Werkstoffes gegen dynamische Reckalterung aus den erfassten Kraft-Weg-Kurven.

9. Vorrichtung nach Anspruch 8, **dadurch gekennzeichnet, dass** ferner ein Temperatursensor (22) zum Erfassen der Temperatur des Probenkörpers (10) vorgesehen ist; und dass die Steuer- und Auswertevorrichtung (24) zum Bestimmen der Anfälligkeit des Werkstoffes gegen dynamische Reckalterung aus den erfassten Kraft-Weg-Kurven mit der Temperatur des Probenkörpers als Parameter ausgebildet ist.

10. Vorrichtung nach Anspruch 8 oder 9, **dadurch gekennzeichnet, dass** eine elektronisch regelbare Heizvorrichtung vorgesehen ist, mittels derer die Werkstofftemperatur während der Aufnahme der Kraft-Weg-Kurven einstellbar ist.

11. Vorrichtung nach einem der Ansprüche 8 bis 10, **dadurch gekennzeichnet, dass** die Steuer- und Auswertevorrichtung (26) ferner einen Timer (26) aufweist und zum Bestimmen der Anfälligkeit des Werkstoffes gegen dynamische Reckalterung aus den erfassten Kraft-Weg-Kurven mit der Eindringrate als Parameter ausgebildet ist.

12. Vorrichtung nach einem der Ansprüche 8 bis 11, **dadurch gekennzeichnet, dass** die Steuer- und Auswertevorrichtung (24) ferner einen Speicher (28) für Messdaten aus herkömmlichen Zugversuchen aufweist und zum Bestimmen der Anfälligkeit des Werkstoffes gegen dynamische Reckalterung aus den erfassten Kraft-Weg-Kurven und einem Vergleich mit den im Speicher abgelegten Messdaten ausgebildet ist.

13. Verwendung des Verfahrens nach einem der Ansprüche 1 bis 7 oder der Vorrichtung nach einem der Ansprüche 8 bis 12 zur Werkstoffprüfung von druckumschließenden Komponenten der Kraftwerkstechnik.
